# EUROPEAN PATENT SPECIFICATION

(11) **EP 2 303 520 B1**
(45) Date of publication and mention of the grant of the patent: **14.12.2011**
(21) Application number: 09750113.4
(22) Date of filing: 22.05.2009
(51) Int. Cl.: B25J 9/06, B25J 9/10, B25J 18/06

(54) **A ROBOTIC ARM**
ROBOTERARM
BRAS ROBOTIQUE

(30) Priority: 23.05.2008 GB 0809485
(43) Date of publication of application: 06.04.2011
(73) Proprietor: Oliver Crispin Robotics Limited, Filton Bristol BS34 7JN (GB)
(72) Inventor: GRAHAM, Andrew, Crispin, Bristol BS16 5AH (GB); BUCKINGHAM, Robert, Oliver, Abingdon OX14 3AY (GB)
(74) Representative: Arrowsmith, Peter Michael E.
(86) International application number: PCT/GB2009/001308
(87) International publication number: WO 2009/141635

(56) References cited:
- WO-A-02/100608
- GB-A- 2 134 483
- US-A- 3 162 214

## Description

This invention relates to robotic arms of the type used to reach a remote work site via a convoluted path; for example inside an engine or a human body.

A known type of robotic arm is able to follow a path to a work site with the body of the arm remaining on the path. This is known as "tip following". That is, the body of the arm follows the path taken by the tip, in a snake like manner. The tip may carry a work took and for certain tasks, it is necessary for the arm to follow the path precisely, and for the tip to be steady and stable. If a process performed at the tip involves loads which are transmitted to the arm, the arm must also be appropriately stiff for the tip to remain steady. Examples of such tasks includes locating surgical tools at the tip of the arm for microscopic surgery through an incision or natural orifice of the body, or conducting repair work within a compressor of a jet engine.

A suitable arm for performing this type of task is described in WO 02/100608, upon which the preamble of claim 1 is based. Such an arm comprises a plurality of sequentially arranged articulated links, with control cables passing from actuators located at the proximal end of the arm, through successive links to terminate each at a more distal control link, for controlling that link. For example, a set of three cables may terminate at a particular link at positions around the circumference of the link. Differential movement of the actuators of the set of cables terminating at a particular link exerts a moment on the link which results in a change of the arm shape. The links may be grouped together, with a group of passive links terminating in a control link is known as a segment, and an arm may have several such controllable segments. Alternatively, each link may be directly controlled. Typically, the apertures in the more proximal links through which the control cables pass are located near the periphery of each link. The actuators may be controlled by a computer control system to adjust the arm shape.

In order that the structure is stable and can be manipulated precisely, it has previously been thought that the cables should fit closely within the apertures. This is so that the links are restricted from moving in relation to the cables, so their position is more accurately determinable. If the cables are a loose fit within the apertures then, particularly when the arm is straight or passes through the straight position, it is possible that the links will be able to move in an uncontrolled manner. The device will therefore be less stiff, less accurately positioned, and may exhibit hysteresis errors. However, because of engineering constraints such as manufacturing tolerances, the need to push the cables through the apertures when the arm is constructed, the tendency of cables to change diameter with changing load, and the need to be able to move the cables within the apertures when the arm is in use, the apertures in practice need to be slightly larger than the cable diameter. Thus there will inevitably be a small error in the positioning of the arm which is difficult to calculate and take account of in controlling the arm shape.

According to the present invention there is provided a robotic arm having a plurality of sequentially arranged articulated links, and at least one group of operating cables extending from a proximal end of the arm to terminate at a control link, for controlling the position of that link, the cables each having a path comprising a passage in each successive more proximal link for closely receiving the cable, characterized in that the arm is configured such that, in the path of at least one cable, at least one pair of adjacent links have passages whose axes are not aligned with each other when the arm is straight, such that the cable bears against a predetermined portion of the passages in use of the arm.

Thus the position of the or each cable may be more accurately know, and may better constrain link movement, even if the cables are of a smaller diameter than the passages. Thus the position of the arm may be more accurately known or calculated, leading to more accurate control of the arm shape.

Preferably, the paths of each of the cables in the at least one group contain a said pair of adjacent links, and the path of the or each cable may each comprise a plurality of the said pairs of adjacent links. For example the pairs of adjacent links may be adjacent each other.

The passages in said pair of adjacent links may be offset with respect to each other, either in the radial or in the circumferential direction. The offset may for example be around 5-10% of the diameter of the passage. For example, the passages through which a particular cable passes may alternate between a particular circumferential position and a position which is slightly offset circumferentially. Thus the cables may follow a zig-zag path, and bear against alternate sides of each passage. It is therefore possible when controlling the arm to know the cable and link position more accurately.

In an alternative embodiment, the passages may be inclined with respect to the axis of the arm, for example in alternately opposite directions. Thus the cable will bear against the one edge of the lower end of the passage, and the opposite edge of the upper end of the passage.

A computer control system may thus control the shape of the arm based on the known position of the cable(s) bearing against the passages. This more precise geometric information forming a model of the arm is used to calculate cable movements for achieving the required arm shape. A more accurate geometric model of the cables and links may form the basis of a more accurate kinematics, statics and dynamics modelling. Forces that are exerted on links and cables from a variety of sources both internal and external may be modelled in order to calculate the shape of the arm given a known loading pattern.

The side of the passage may comprise a straight side, a curved side, or an angled side. Advantageously, the side of each passage, at least in the predetermined region, and/or each cable, has a surface comprising low friction material. Alternatively, the side of the passage may comprise a bearing. For example, a bearing in the form of spherical balls housed within a ball race embedded in each link (a so called nano-bearing) may be used. This has the advantage of reducing frictional forces. Since frictional forces are difficult to model, this improves the accuracy of the model of the arm used by the control system for control of the arm.

Alternatively or in addition, friction may be dissipated by movement of the cables or the links. Thus, the arm may comprise a control system arranged to produce oscillating movement of cables. The oscillating movement may be in the axial or circumferential direction, or may be rotational movement. If circumferential or rotational movement of the cables is used to dissipate friction, this may be in one direction only rather than oscillating, since such rotational movement does not directly affect the control of the position of the arm, which is rather affected by the lengths of the cables.

Such anti-friction control signals may be superimposed using the existing cable control system, or may be provided by an additional control system which may be located at points along the arm. For example, actuators for producing oscillation in the cables may be arranged on links along the length of the arm.

Alternatively, each or some of the links may be arranged to provide oscillating movement of the passages. For example, each link may include a piezo actuator to produce oscillating movement in the passage, for example by compressing and releasing the cable or by agitating it.

Producing relative movement between the cable and the passage acts to assist release of the cable from frictional adherence in the passage, such that it runs more freely. This has the effect of equalising the tension in the cables either side of a link. This process may be applied to all links at the same time, or gradually or sequentially along the length of the arm. Thus, the cable position is easier to determine, and distortions in the arm shape may be alleviated.

An alternative approach to reducing friction is to rotate the arm. Thus the control system may be arranged to rotate or roll the arm around its own axis by a small amount either continuously or in an oscillating movement. This can be done in use of the arm without changing the position in space of the arm and the arm tip, or the shape of the arm. The control system may be arranged to do this simultaneously with producing advancing movement of the arm. In the situation where a tool is mounted on the end of the arm, the rolling movement of the arm may be counteracted by an equal and opposite roll of the joint between the tool and the arm tip, such that the tool remains in the same position. Alternatively, if the tool is arranged to produce an image (such as a camera), software may be used to counter-rotate the image. An advantage of this approach is that it reduces or evenly distributes wear on the cables which would otherwise occur where repetitive movements are carried out by the arm.

In order that the invention may be more readily understood, reference will now be made to the accompanying drawings, in which:
Figures la to 1c are cross-sectional side views of a section of a robotic arm according to the prior art;
Figure 2 is a schematic perspective view of a section of a robotic arm according to one embodiment of the invention;
Figure 3 is a schematic cross-sectional side view of the arm of Figure 2;
Figure 4 is a schematic perspective view of a section of robotic arms according to another embodiment of the invention;
Figure 5 is a schematic perspective view of a section of a robotic arm according to a further embodiment of the invention;
Figure 6 is a schematic cross-sectional side view of the arm of Figure 4; and
Figure 7 is a schematic perspective cross-sectional side view showing a cable in a link passage suitable for a robotic arm according to the invention.

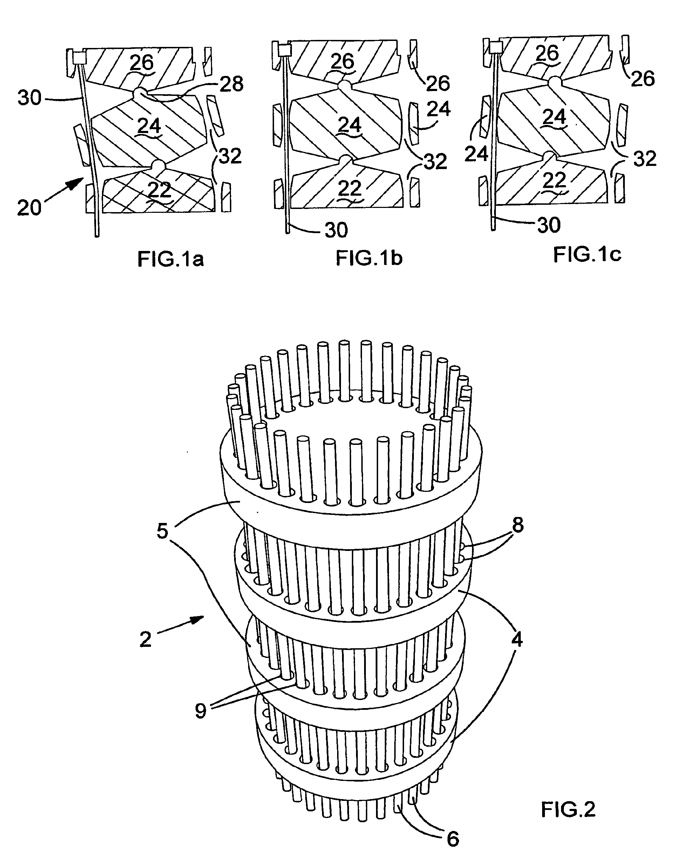

Referring to Figures 1a to 1c, the same section of a robotic arm 20 is shown, which comprises a base link 22, a mid-segment link 24, and a segment tip link 26, having articulated joints 28 therebetween. A control cable 30 is shown extending from the proximal end of the arm through the base link 22 and the mid-segment link 24 and terminating at the segment tip link 26. It can be seen that changing the length of the cable 30 alters the position of the tip link 26 to bend the segment of the arm. One or two further similar cables 30 may also be provided arranged around the circumference of the links, but these have been omitted for simplicity.

In each of the Figure 1a, 1b and 1c, the length of the cable 30 is constant. However, because the cross-sectional size of the passages is larger that the cross-sectional size of the cable 30, the boundaries or walls of the passages 32 are not necessarily in contact with the cable 30. In the case of the mid-segment link 24, the cable 30 is not imparting a force onto the link 24, such that it can rotate about a horizontal axis and adopt a position either turning to the left as shown in Figure 1a, or turning to the right as shown in Figure 1c, or being straight as shown in Figure 1b. Furthermore the cable 30 may move between a position contacting the left hand side of the passage 32 in the base link 22 as shown in Figure 1a, to a position contacting the right hand side of the passage 32 in the base link 22 as shown in Figure 1c. Thus the positions of the links 22, 24, 26 in relation to each other, and the state of contact between the passages 32 and the cable 30 are indeterminate over a range of motion.

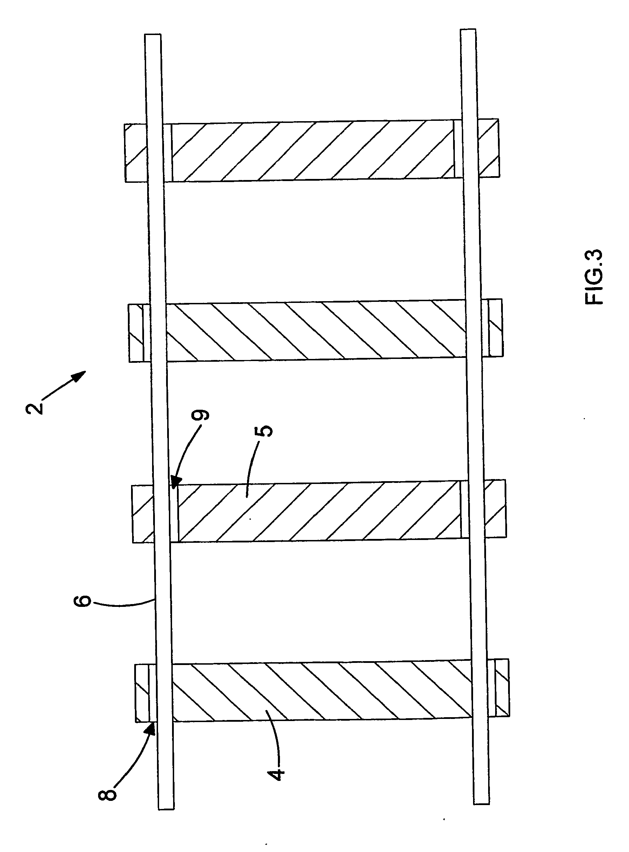

Referring to Figures 2 and 3, the arm 2 according to the invention comprises sequentially arranged links 4, 5. The links 4, 5 are articulated with respect to each other by bearings (not shown) to allow relative movement therebetween to bend the arm. The arm 2 comprises control cables 6 passing through passages 8 arranged around the circumference of each link 4, 5.

As can clearly be seen from Figure 3, the passages 8 formed in one set of alternate links 4 are located slightly further radially outwardly in relation to the passages 9 in the other set of alternate links 5. The offset is sufficient that the cables 6 are retained bearing against the radially inward boundary or wall of the passage 8 in the link 4 of the first set, and against the radially outward boundary or wall of the passage 9 in the link 5 of the other set. The passages 8, 9 of necessity are slightly larger than the cable diameter, for ease of assembly of the arm, and because of manufacturing tolerances and stretch of the cable in use.

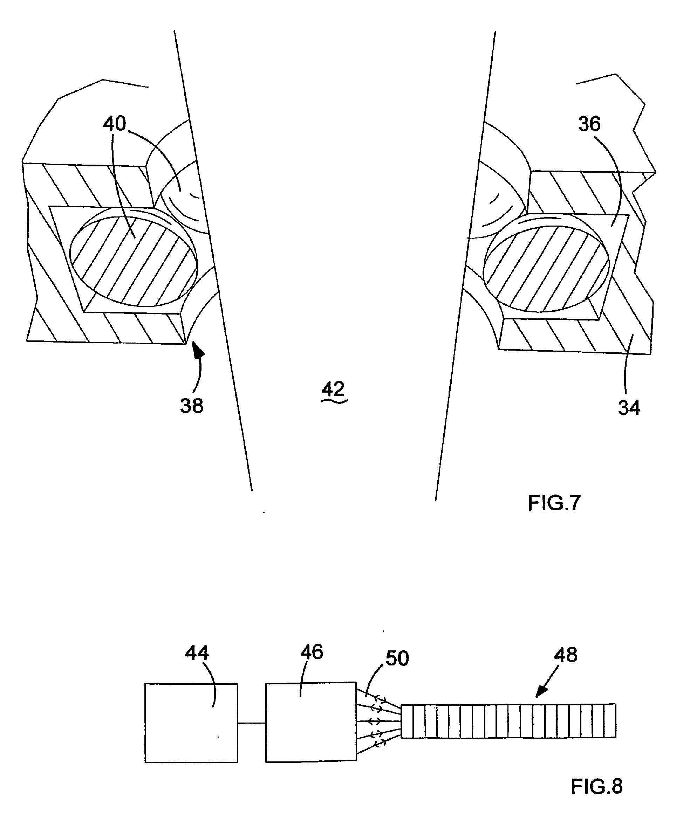

It will therefore be understood that the positions of the links 4, 5 can be more accurately determined than in the prior art case, since they are constrained by the cables 6. Also the state of contact between the cables 6 and the links 4, 5 is known. This means that the computer control system 44 operating the arm 48 (see Figure 8) may have a better model of the shape of the arm and the positions of the links 4, 5 and/or cables 6, so that the arm may be more accurately controlled. Furthermore, the links 4 and 5 are better constrained against uncontrolled movement.

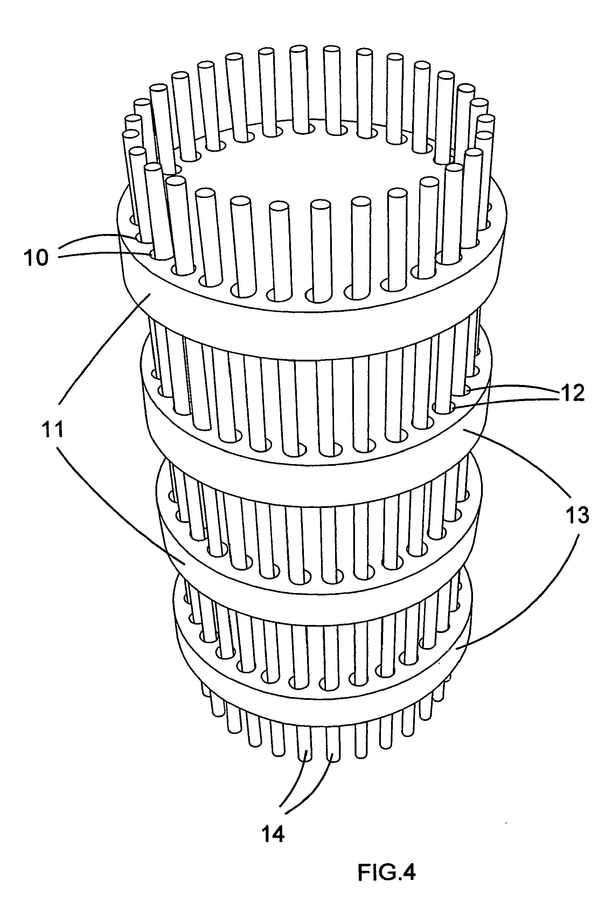

In another arrangement shown in Figure 4, the passages 10 in a first set of alternate links 11 are offset circumferentially from the passages 12 in the second set of alternate links 13. With this arrangement, the cables 14 bear alternately against the left sides or the right sides of the passages 10, 12 through which they pass.

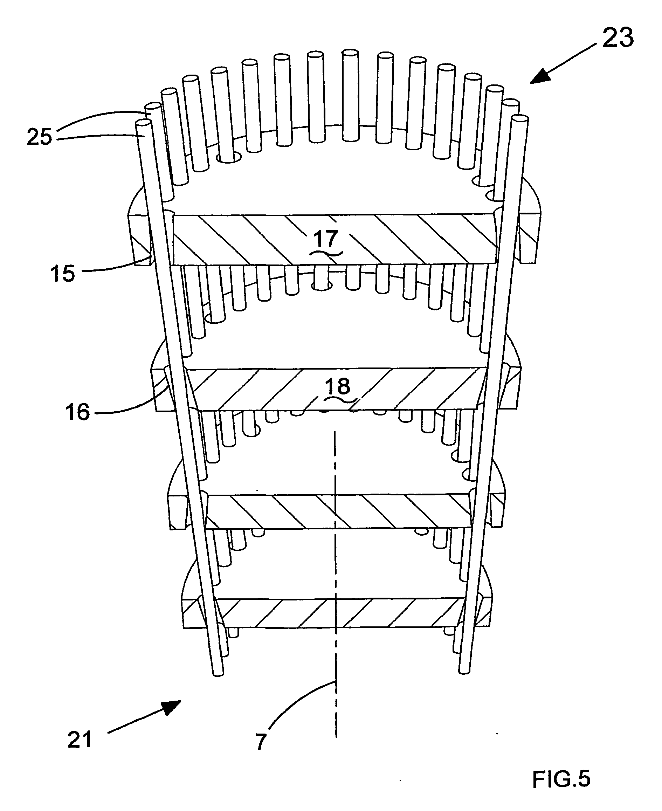

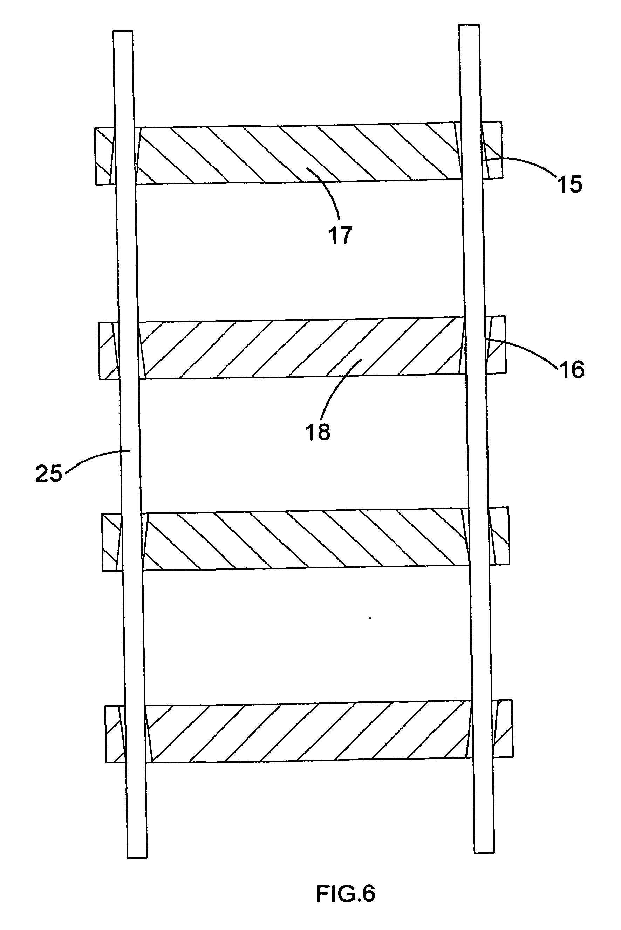

In another possible arrangement as shown in Figures 5 and 6, the passages 15, 16 in the links 17, 18 are angle with respect to the axis of the arm. In the first set of links 17, the passages 15 are angled radially inwardly from the proximal end 21 to the distal end 23, whilst in the second set of alternate links 18, the passages 16 are angled radially outwardly. Thus each cable 25 bears against both the lower end and the upper end of each passage 15, 16.

Whilst it has been shown that the cables in these examples are straight when the arm is straight, it may be the case that the offset is slightly larger than shown, such that the cables for example take up a zig-zag shaped path through the links.

It will be appreciate that, if the cables bear tightly against the walls of the passages, this may increase the friction in the system. An approach to reducing friction is shown in Figure 7. The link 34 comprises a ball race 36 around the passage 38 which mounts bearing balls 40. This so-called nano bearing allows the cable 42 to run more freely through the passage 38.

An alternative approach is to produce relative movement between the cables and the links to release frictional adherence. For example, the actuators may be used to product a small oscillating movement in addition to the control of movement of the cables. As shown in Figure 8, the computer control system 44 controls a set of actuators 46 for the cables 50 leading to the control links of the arm 48. In addition to paying out or winding in the control cables 50 in order to control the arm shape, there may also be a small oscillating axial movement of the cables, or "dither" movement, as shown by the arrows in Figure 8.

## Claims

1. A robotic arm (2) having a plurality of sequentially arranged articulated links (4, 5, 17, 18), and at least one group of operating cables (6) extending from a proximal end of the arm to terminate at a control link, for controlling the position of that link, the cables each having a path comprising a passage (9, 15, 16) in each successive more proximal link for closely receiving the cable, **characterised in that** the arm is configured such that, in the path of at least one cable, at least one pair of adjacent links have passages whose axes are not aligned with each other when the arm is straight, such that the cable bears against a predetermined portion of the passages in use of the arm.

2. A robotic arm as claimed in claim 1, in which the paths of each of the cables in the at least one group contain a said pair of adjacent links.

3. A robotic arm as claimed in claims 1 or 2, wherein the path of the or each cable comprises a plurality of the said pairs of adjacent links.

4. A robotic arm as claimed in any of claims 1 to 3, comprising a plurality of groups of cables and a plurality of respective control links.

5. A robotic arm as claimed in any of claims 1 to 4, in which the axes of the passages in the pair of adjacent links are offset with respect to each other either in the radial or in the circumferential direction.

6. A robotic arm as claimed in any of claims 1 to 5, in which the axes of at least one of the passages in the pair of links is inclined with respect to the axis of the arm.

7. A robotic arm as claimed in claim 6, in which the passages in the adjacent links are inclined in different directions.

8. A robotic arm as claimed in any preceding claim, in which the predetermined portion of the passages and/or the cable has a surface comprising low friction material.

9. A robotic arm as claimed in any preceding claim, in which at least the predetermined portion of the passages comprises a bearing (36, 40).

10. A robotic arm as claimed in any preceding claim, comprising an actuator associated with each cable, and a control system (44) arranged to operate the actuators (46) to control the position of the at least one control link, based on the at least one cable bearing against the predetermined portion of the passages.

11. A robotic arm as claimed in claim 10, in which the control system is arranged to produce oscillating movement of the or each cable, for alleviating frictional adherence between the cable and the passages.

12. A robotic arm as claimed in claim 10 or 11, in which the control system is arranged to produce circumferential or rotational movement of the or each cable.

13. A robotic arm as claimed in claim 11 or claim 12, in which actuators for producing the oscillation or rotational movement in the or each cables are arranged along the length of the arm.

14. A robotic arm as claimed in any preceding claim, in which at least some of the links are arranged to provide oscillating movement of the passages.

15. A method of operating a robotic arm as claimed in any of claims 10 to 14, comprising inputting into the control system data relating to the geometric position of each cable and each link.

## Patentansprüche

1. Ein Roboterarm (2) mit einer Mehrzahl von aufeinanderfolgend angeordneten gelenkigen Verbindungsgliedern (4, 5, 17, 18) sowie mindestens einer Gruppe von Betriebskabeln (6), die sich von einem proximalen Ende des Arms erstrecken, um bei einem Betätigungsverbindungsglied aufzuhören, zum Steuern der Position dieses Verbindungsglieds, wobei die Kabel jeweils einen Weg umfassen, der einen Durchgang (9, 15, 16) in jedem nachfolgenden proximaleren Verbindungsglied zum engen Aufnehmen des Kabels aufweist, **dadurch gekennzeichnet, dass** der Arm so konfiguriert ist, dass im Weg des mindestens einen Kabels mindestens ein Paar von benachbarten Verbindungsgliedern Durchgänge aufweist, deren Achsen nicht miteinander ausgerichtet sind, wenn der Arm grade ist, sodass das Kabel sich gegen einen vorbestimmten Bereich der Durchgänge bei Verwendung des Arms stützt.

2. Ein Roboterarm gemäß Patentanspruch 1, bei dem die Wege von jedem Kabel in der mindestens einen Gruppe das Paar von benachbarten Verbindungsliedern umfassen.

3. Ein Roboterarm gemäß Patentanspruch 1 oder 2, wobei der Weg des oder jedes Kabels eine Mehrzahl der Paare von benachbarten Verbindungsgliedern umfasst.

4. Ein Roboterarm gemäß einem der Patentansprüche 1 bis 3, der eine Mehrzahl von Gruppen von Kabeln sowie eine Mehrzahl von jeweiligen Betätigungsverbindungsgliedern umfasst.

5. Ein Roboterarm gemäß einem der Patentansprüche 1 bis 4, bei dem die Achsen der Durchgänge bei dem Paar von benachbarten Verbindungsgliedern in Bezug aufeinander entweder in der radialen oder in der umfänglichen Richtung versetzt sind.

6. Ein Roboterarm gemäß einem der Patentansprüche 1 bis 5, bei dem die Achsen von mindestens einem der Durchgänge bei dem Paar von Verbindungsgliedern schräg in Bezug auf die Achse des Arms sind.

7. Ein Roboterarm gemäß Patentanspruch 6, bei dem der Durchgang bei den benachbarten Verbindungsgliedern in verschiedene Richtungen schräg ist.

8. Ein Roboterarm gemäß einem der vorgehenden Patentansprüche, bei dem der vorbestimmte Bereich der Durchgänge und/oder der Kabel eine Oberfläche aufweist, die ein reibungsarmes Material umfasst.

9. Ein Roboterarm gemäß einem der vorhergehenden Patentansprüche, bei dem mindestens der vorbestimmte Bereich der Durchgänge ein Lager (36, 40) umfasst.

10. Ein Roboterarm gemäß einem der vorhergehenden Patentansprüche, der ein Stellglied, das zu jedem Kabel zugehörig ist, sowie ein Steuersystem (44) aufweist, das angeordnet ist, um die Stellglieder (46) zu betreiben, um die Position des mindestens einen Betätigungsverbindungsglieds basierend auf dem mindestens einen Kabel zu steuern, das sich gegen den vorbestimmten Bereich der Durchgänge stützt.

11. Ein Roboterarm gemäß Patentanspruch 10, in dem das Steuersystem angeordnet ist, um eine schwingende Bewegung von dem oder jedem Kabel zum Abmildern einer Reibhaftung zwischen dem Kabel und den Durchgängen zu erzeugen.

12. Ein Roboterarm gemäß Patentanspruch 10 oder 11, bei dem das Steuersystem angeordnet ist, um eine Umfangs- oder Drehbewegung von dem oder jedem Kabel zu erzeugen.

13. Ein Roboterarm gemäß Patentanspruch 11 oder Patentanspruch 12, bei dem Stellglieder zum Erzeugen der schwingenden oder Drehbewegung in dem oder jedem Kabel entlang der Länge des Arms angeordnet sind.

14. Ein Roboterarm gemäß einem der vorhergehenden Patentansprüche, bei dem mindestens einige der Verbindungsglieder angeordnet sind, um eine schwingende Bewegung der Durchgänge bereitzustellen.

15. Ein Verfahren zum Betreiben eines Roboterarms gemäß einem der Patentansprüche 10 bis 14, umfassend: Eingeben von Daten in das Steuersystem, die sich auf die geometrische Position jedes Kabels und jedes Verbindungsglieds beziehen.

## Revendications

1. Bras robotique (2) comportant une pluralité de liaisons articulées (4, 5, 17, 18) agencées séquentiellement, et au moins un groupe de câbles d'actionnement (6) s'étendant d'une extrémité proximale du bras pour se terminer au niveau d'une liaison de commande, pour commander la position de cette liaison, les câbles ayant chacun un chemin comprenant un passage (9, 15, 16) dans chaque liaison successive plus proche pour recevoir étroitement le câble, **caractérisé en ce que** le bras est configuré de sorte que, dans le chemin d'au moins un câble, au moins une paire de liaisons adjacentes ont des passages dont les axes ne sont pas alignés l'un avec l'autre lorsque le bras est droit, de sorte que le câble s'appuie contre une partie prédéterminée des passages lorsque le bras est en cours d'utilisation.

2. Bras robotique selon la revendication 1, dans lequel les chemins de chacun des câbles dans ledit au moins un groupe contiennent une dite paire de liaisons adjacentes.

3. Bras robotique selon la revendication 1 ou 2, dans lequel le chemin du ou de chaque câble comprend une pluralité desdites paires de liaisons adjacentes.

4. Bras robotique selon l'une quelconque des revendications 1 à 3, comprenant une pluralité de groupes de câbles et une pluralité de liaisons de commande respectives.

5. Bras robotique selon l'une quelconque des revendications 1 à 4, dans lequel les axes des passages dans la paire de liaisons adjacentes sont décalés l'un par rapport à l'autre soit dans la direction radiale, soit dans la direction circonférentielle.

6. Bras robotique selon l'une quelconque des revendications 1 à 5, dans lequel l'axe d'au moins l'un des passages dans la paire de liaisons est incliné par rapport à l'axe du bras.

7. Bras robotique selon la revendication 6, dans lequel les passages dans les liaisons adjacentes sont inclinés dans différentes directions.

8. Bras robotique selon l'une quelconque des revendications précédentes, dans lequel la partie prédéterminée des passages et/ou le câble a une surface comprenant un matériau à faible coefficient de frottement.

9. Bras robotique selon l'une quelconque des revendications précédentes, dans lequel au moins la partie prédéterminée des passages comprend un roulement (36, 40).

10. Bras robotique selon l'une quelconque des revendications précédentes, comprenant un actionneur associé à chaque câble, et un système de commande (44) agencé pour mettre en oeuvre les actionneurs (46) pour commander la position de ladite au moins une liaison de commande, sur la base dudit au moins un câble s'appuyant contre la partie prédéterminée des passages.

11. Bras robotique selon la revendication 10, dans lequel le système de commande est agencé pour produire un mouvement oscillant du ou de chaque câble, pour atténuer l'adhérence par frottement entre le câble et les passages.

12. Bras robotique selon la revendication 10 ou 11, dans lequel le système de commande est agencé pour produire un mouvement circonférentiel ou de rotation du ou de chaque câble.

13. Bras robotique selon la revendication 11 ou la revendication 12, dans lequel les actionneurs pour produire le mouvement oscillant ou de rotation dans le ou chaque câble sont agencés le long de la longueur du bras.

14. Bras robotique selon l'une quelconque des revendications précédentes, dans lequel au moins certaines des liaisons sont agencées pour réaliser le mouvement oscillant des passages.

15. Procédé de mise en oeuvre d'un bras robotique selon l'une quelconque des revendications 10 à 14, consistant à entrer, dans le système de commande, des données concernant la position géométrique de chaque câble et de chaque liaison.
